# EUROPEAN PATENT APPLICATION

(11) **EP 3 993 083 A1**
(43) Date of publication of application: **04.05.2022**
(21) Application number: 20832261.0
(22) Date of filing: 05.06.2020

(54) **BATTERY MODULE**

(30) Priority: 27.06.2019 JP 2019119389
(71) Applicant: Sekisui Polymatech Co., Ltd., Saitama-city, Saitama 338-0837 (JP)
(72) Inventor: OZAWA, Motoki, Saitama-city, Saitama 338-0837 (JP); KITADA, Gaku, Saitama-city, Saitama 338-0837 (JP)
(74) Representative: Ter Meer Steinmeister & Partner
(86) International application number: PCT/JP2020/022339
(87) International publication number: WO 2020/261940

(57) **Abstract**

The present invention is a battery module comprising a case, a plurality of cells being arranged in the case and having an energy density of 200 Wh/L or more, and a heat absorbing member provided at least either between the case and the plurality of cells or between the plurality of cells, wherein the heat absorbing member has an endothermic quantity Q from 150°C to 350°C of 500 J/cm³ or more and a thermal conductivity λ of 0.8 W/mK or more.

According to the present invention, there can be provided a battery module whose temperature hardly rises in an abnormal early period and in a certain period from abnormality occurrence.

## Description

### Technical Field

The present invention relates to a battery module comprising a specific heat absorbing member.

### Background Art

In recent years, electric vehicles are spreading from the viewpoint of environmental problems and the like. The electric vehicles are mounted with batteries such as lithium ion secondary batteries. The batteries used for the electric vehicles require a high output and a large capacity and single battery cells cannot suffice, and therefore battery modules made by combining pluralities of battery cells and battery packs made by combining pluralities of the battery modules are used.

There is such a problem with battery cells that in the case where abnormalities such as an internal short circuit and reception of damage from the outside occur, the battery cells generate heat, which is transferred to adjacent cells, causing temperature rise and leading to occurrence of thermal runaway of whole batteries.

From the viewpoint of improving this problem, PTL 1 describes a thermal runaway-preventing sheet which contains at least one of a mineral powder and a fire retardant, and in which an endothermic reaction is initiated at 100 to 1,000°C and a specific structural change is caused by the endothermic reaction, and discloses that the thermal runaway-preventing sheet develops a thermal insulation capability and can prevent continuous thermal runaway of adjacent cells.

### Citation List

### Patent Literature

PTL 1: JP 2018-206605 A

### Summary of Invention

### Technical Problem

The above thermal runaway-preventing sheet, however, though being able to suppress the thermal transfer to adjacent cells to a certain extent by its heat insulation capability, has room for improvement from the viewpoint of sufficiently cooling rapid heat generation in an abnormal early period. Further in the case where the sheet has the thermal insulation capability, after a heat absorbing agent or the like is consumed, high temperature rise is brought about in some cases.

Therefore, an object of the present invention is to provide a battery module in which even in the case where abnormality has occurred in a battery cell, the temperature rise can effectively be suppressed in an abnormal early period and in a certain period from abnormality occurrence.

### Solution to Problem

As a result of exhaustive studies, the present inventor has found that the above problem can be solved by a battery module comprising a heat absorbing member having an endothermic quantity and a thermal conductivity in specific ranges, and this finding has led to the completion of the present invention.

The present invention provides the following [1] to [8].
[1] A battery module, comprising a case, a plurality of cells being arranged in the case and having an energy density of 200 Wh/L or more, and a heat absorbing member provided at least either between the case and the plurality of cells or between the plurality of cells, wherein the heat absorbing member has an endothermic quantity Q from 150°C to 350°C of 500 J/cm³ or more and a thermal conductivity λ of 0.8 W/mK or more.
[2] The battery module according to the above [1], wherein the heat absorbing member is provided so that the endothermic quantity Qs per unit area of the cell surface is 50 J/cm² or more.
[3] The battery module according to the above [1] or [2], wherein the product (λ × Q) of the thermal conductivity λ and the endothermic quantity Q is 1,000 W·J/mK·cm³ or more.
[4] The battery module according to any one of the above [1] to [3], wherein the heat absorbing member comprises a resin and a filler.
[5] The battery module according to the above [4], wherein the resin is a silicone rubber.
[6] The battery module according to the above [4] or [5], wherein the filler comprises at least aluminum hydroxide.
[7] The battery module according to the above [6], wherein the aluminum hydroxide comprises a small-particle diameter aluminum hydroxide having an average particle diameter of 2 µm or less, and a large-particle diameter aluminum hydroxide having an average particle diameter of more than 2 µm.
[8] The battery module according to the above [6] or [7], wherein the heat absorbing member comprises 100 parts by mass or more of the aluminum hydroxide with respect to 100 parts by mass of the resin.

### Advantageous Effect of Invention

According to the present invention, there can be provided a battery module which can effectively suppress a temperature rise in an abnormal early period and in a certain period from abnormality occurrence.

### Brief Description of Drawings

[Fig. 1] Fig. 1 is a cross-sectional view schematically showing one example of an arrangement of a heat absorbing member of a battery module.
[Fig. 2] Fig. 2 is a perspective view of one embodiment of a cell.
[Fig. 3] Fig. 3 is a cross-sectional view schematically showing another example of an arrangement of a heat absorbing member of a battery module.
[Fig. 4] Fig. 4 is a cross-sectional view schematically showing another example of an arrangement of a heat absorbing member of a battery module.
[Fig. 5] Fig. 5 is a cross-sectional view schematically showing another example of an arrangement of a heat absorbing member of a battery module.
[Fig. 6] Fig. 6 is an explanatory view showing one example of an assembling state of a battery module.
[Fig. 7] Fig. 7 is an explanatory view showing another example of an assembling state of a battery module.
[Fig. 8] Fig. 8 is an explanatory view showing one example of an assembling state of a battery pack.

### Description of Embodiments

The present invention is a battery module comprising a case, a plurality of cells being arranged in the case and having an energy density of 200 Wh/L or more, and a heat absorbing member provided at least either between the case and the plurality of cells or between the plurality of cells. The endothermic quantity Q from 150°C to 350°C of the heat absorbing member is 500 J/cm³ or more and the thermal conductivity λ of the heat absorbing member is 0.8 W/mK or more.

Embodiments of the present invention will be described by way of the drawings. Here, the present invention is not limited to the contents of following drawings.

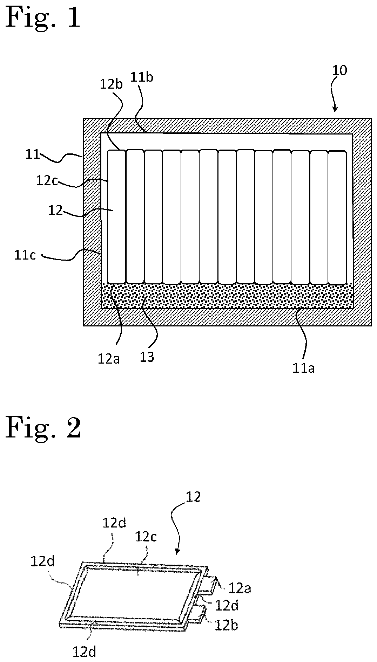

Fig. 1 is a cross-sectional view schematically showing one example of an arrangement of a heat absorbing member of a battery module. The battery module 10 has a case 11, a plurality of cells 12 arranged in the case 11, and a heat absorbing member 13 provided between the case and the cells 12.

The cell 12 is a structural unit such as a lithium ion secondary battery, and is usually constituted of an armoring film and battery elements, not shown in figure, enclosed in the armoring film. The battery elements include a positive electrode, a negative electrode, a separator and an electrolyte solution. The cell 12, as shown in Fig. 2, is a flat body having a small thickness compared with the width, in which a positive electrode 12a and a negative electrode 12b are exposed to the outside and a flat face 12c is so formed as to have a larger thickness than compression bonded edges 12d.

The energy density of the cell 12 is 200 Wh/L or more. By making the energy density to be thus high, the cell 12 is enabled to be down-sized. On the other hand, although since the energy density is high, it is apprehended that the cell 12 is liable to make high temperatures in the case where abnormalities such as short circuit occur, as described later, the temperature rise of the cell 12 is easily suppressed since the heat absorbing member 13 has an endothermic quantity Q and a thermal conductivity λ in certain values or more. The higher the energy density of the cell 12, the better, but the energy density is usually 700 Wh/L or less.

In the case 11, the plurality of cells 12 are laminated so that mutual flat faces are made to contact with each other, and each of the cells 12 is arranged so that its longitudinal direction becomes the up and down direction of the case 11. The case 11 is a member to collectively cover the cells 12. The material to be used for the case 11 is one having a strength capable of holding the plurality of cells 12 and causing no deformation by heat generated from the cells 12, and in consideration of the balance among the strength, the weight, the heat resistance and the like, use of aluminum is preferable.

The heat absorbing member 13 is provided between the lower face 11a of the case 11 and the lower edge faces 12a of the cells 12. In the case where abnormalities such as an internal short circuit and damage from the outside occur, the heat absorbing member 13 can effectively suppress the temperature rise of the battery module in an abnormal early period and in a certain period from abnormality occurrence. This is presumably because since the endothermic quantity Q of the heat absorbing member 13 when being heated at 150 to 350°C is a certain value or more, the temperature rise of the cells 12 is suppressed, and since the thermal conductivity λ is a certain value or more, heat generated from the cells 12 is effectively easily transferred to the case 11. Then it is presumed that the thermal conductivity λ being a certain value or more suppresses particularly the temperature rise in an abnormal early period, and the endothermic quantity Q being a certain value or more suppresses the continuous temperature rise in an abnormal early period and in a certain period from abnormality occurrence.

In Fig. 1, although there is shown a form in which the heat absorbing member 13 is provided between the lower face 11a of the case 11 and the lower edge faces 12a of the cells 12, the arrangement of the heat absorbing member 13 is not limited only to this form and the heat absorbing member 13 may be provided in any spaces between any face of the case 11 and faces of the cells 12 proximate to the any face. Specifically, the heat absorbing member 13 may be provided between a side face 11c of the case and a flat face 12c of the cell 12, between the upper face 11b of the case and the upper edge faces 12b of the cells 12, or in other spaces.

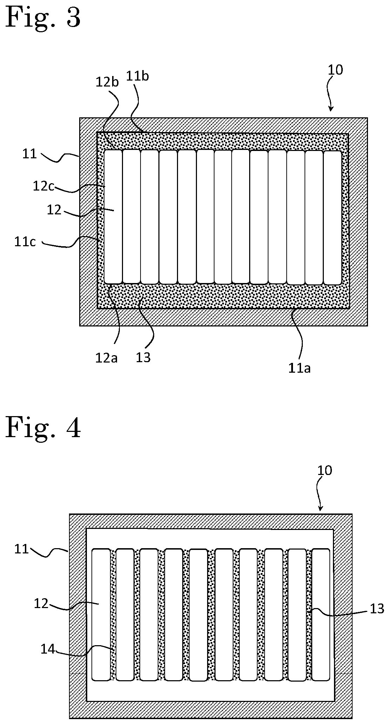

Further, the heat absorbing member 13 may be provided in all spaces (that is, all spaces inside the case 11) between all faces of the case 11 and faces of the cells 12 proximate to the all faces; as shown in Fig. 3, the heat absorbing member 13 may be arranged so as to wrap the whole of the plurality of cells 12 therein. In this case, heat generated from the cells 12 is enabled to be more effectively reduced.

In the above Figs. 1 and 3, although a form is shown in which the heat absorbing member 13 is provided between the case 11 and the cells 12, as shown in Fig. 4, the heat absorbing member 13 may be provided between the plurality of cells 12 (between the cells, 14). In this case, the heat absorbing member 13 can suppress the temperature rise of cells in which abnormalities have occurred and makes difficult the heat transfer at high temperatures to adjacent cells 12 and can suppress spread of the abnormalities. Thereby, the temperature rise can effectively be suppressed in an abnormal early period and in a certain period from abnormality occurrence.

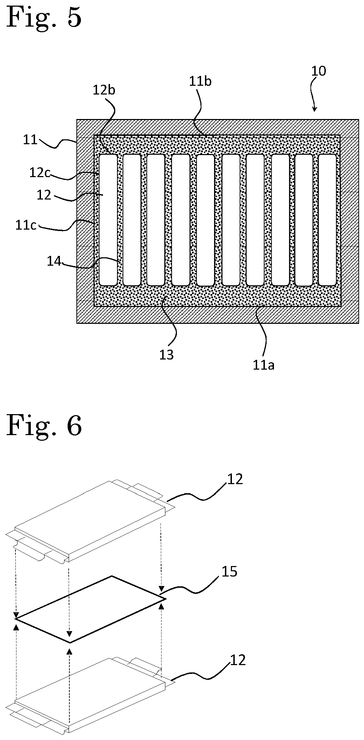

Further, the heat absorbing member 13 may be provided between the case 11 and the cells 12, and simultaneously between the plurality of cells 12. In Fig. 5, the heat absorbing member 13 is provided in all spaces between the plurality of cells 12 and between all faces of the case 11 and faces of the cells 12 proximate to the all faces (in other words, the heat absorbing member 13 is provided in all spaces inside the case 11), enabling the temperature rise of the cells 12 to be especially effectively suppressed.

In Fig. 1 and the like, although laminate-type cells using armoring films are described as the cells 12, rectangular or cylindrical cells other than the laminate-type cells may be used.

Further in Fig. 1 and the like, although a form is shown in which a plurality of cells 12 are laminated in contact with each other, between a cell 12 and a cell 12, a functional member such as an absorbing material or a cooling fin may be provided.

For example, as shown in Fig. 6, a sheet-shape absorbing material 15 may be provided between a cell 12 and a cell 12. By providing the absorbing material 15, impact absorbability is improved and occurrence of abnormalities of the cells 12 caused by external impact and the like can be reduced. Further, though not shown in figure, sub-modules made by laminating a plurality of cells 12, preferably two cells 12, may be prepared and the absorbing material 15 may be provided between a sub-module and a sub-module.

The absorbing material 15 specifically include foams and low-hardness rubber. The absorbing material 15 may be provided singly or two or more may be provided.

Then a form is preferable in which the absorbing material 15 and the heat absorbing member 13 are side by side arranged between a cell 12 and a cell 12, or a form is preferable in which the heat absorbing member 13 is arranged between the absorbing material 15 and a cell 12. Thereby, the occurrence of abnormalities of the cells 12 can be reduced and simultaneously, even when abnormalities occur, the temperature rise of the cells 12 can be suppressed, raising the safety of the battery module.

In the case where the absorbing material 15 and the heat absorbing member 13 are side by side arranged between a cell 12 and a cell 12, it is preferable that the heat absorbing member 13 is arranged at a portion where fear of breakage is large and the absorbing material 15 is arranged at other portions. For example, a form is one example, in which the absorbing material 15 is arranged at the vicinity of the center of a cell 12 and the heat absorbing member 13 is arranged at the vicinity of outer edges and corners thereof.

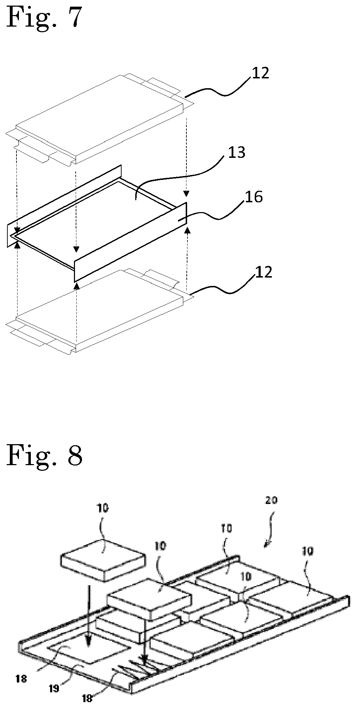

Further as shown in Fig. 7, a cooling fin 16 may be provided between a cell 12 and a cell 12. The cooling fin 16 is a member having a sheet and locking parts provided on both edges of and along the longitudinal direction of the sheet, and the member whose cross-section is an H shape. Though not shown in figure, sub-modules made by laminating a plurality of cells 12, preferably two cells 12, may be prepared and the cooling fin 16 may be provided between a sub-module and a sub-module.

The cooling fin 16 is made preferably of a metal, and more preferably of aluminum. By the cooling fin 16, it becomes easy for the temperature rise of the cells 12 to be suppressed.

The cooling fin 16 may be provided singly or two or more may be provided.

Between the cooling fin 16 and a cell 12, a heat-dissipating adhesive or a heat-dissipating sheet may be provided. Among these, it is preferable that the heat absorbing member 13 is arranged between the cooling fin 16 and the cell 12. Thereby, heat generated from the cells 12 is effectively cooled by the heat absorbing member 13 and the cooling fin 16. The heat generated from the cells 12 transfers to case faces through the heat absorbing member 13 and the locking parts of the cooling fin 16, and more effectively dissipated and cooled. Here, the structure of the cooling fin 16 is not limited to the above form.

### (Heat absorbing member)

In the heat absorbing member in the present invention, the endothermic quantity Q from 150°C to 350°C is 500 J/cm³ or more. The endothermic quantity Q is an endothermic quantity from 150°C to 350°C when the heat absorbing member is heated at a certain temperature-rise rate. When the endothermic quantity Q is less than 500 J/cm³, it becomes difficult for the temperature rise of the battery module to be suppressed. The endothermic quantity Q is preferably 1,000 J/cm³ or more, more preferably 1,500 J/cm³ or more and still more preferably 2,000 J/cm³ or more. The larger the endothermic quantity Q, the better, but the endothermic quantity Q is usually 4,000 J/cm³ or less.

Here, the endothermic quantity Q of the heat absorbing member can be calculated from an endothermic quantity Qf (J/cm³) of a filler, described later, contained in the heat absorbing member and a volumetric proportion of the filler in the heat absorbing member. The endothermic quantity Qf of the filler is an endothermic quantity of the filler from 150°C to 350°C. In the case where the proportion of the volume of the filler to the whole of the heat absorbing member is represented as an X% by volume, the endothermic quantity Q of the heat absorbing member can be determined by the expression: the endothermic quantity Q of the heat absorbing member = the endothermic quantity Qf of the filler × X / 100. The endothermic quantity Qf of the filler is determined by measurement by TG-DTA.

The endothermic quantity Qf can be measured by a TG-DTA analyzer. The measurement condition is: using a φ5 mm aluminum pan; in a nitrogen atmosphere (flow volume: 50 ml/min); and at a temperature-rise rate of 5°C/min, from 25°C.

In the case where the measurement of the endothermic quantity Qf of the filler is difficult, the endothermic quantity Q of the heat absorbing member can also be measured directly by TG-DTA. In this case, a disc-shape test piece of φ5 mm and 2 mm in thickness of the heat absorbing member is fabricated; the test piece is arranged so as to closely contact with the bottom face of the φ5 mm aluminum pan; and the measurement is carried out in a nitrogen atmosphere (flow volume: 50 ml/min) and at a temperature-rise rate of 5°C/min, from 25°C.

The thermal conductivity λ of the heat absorbing member is 0.8 W/mK or more. When the thermal conductivity is less than 0.8 W/mK, heat transfer hardly occurs from the heat absorbing member to the case and the like; hence, the temperature rise of the battery module in which abnormalities have occurred is liable to become high. The thermal conductivity λ of the heat absorbing member is preferably 1.0 W/mK or more and more preferably 1.5 W/mK or more. The upper limit of the thermal conductivity is preferably 4.0 W/mK or less, more preferably 3.4 W/mK or less and still more preferably 2.8 W/mK or less.

The thermal conductivity λ can be measured by a method according to ASTM D5470-06.

Specifically, there are prepared specimens having thicknesses in the range of 0.5 mm to 5.0 mm (preferably 1.0 mm to 3.0 mm) of a heat absorbing member; and the thermal resistance is measured for the specimens having three different thicknesses and the thermal conductivity is calculated. With regard to specimens having different thicknesses, specimens having different thicknesses may be provided separately, or the measurement may be carried out by changing the compression ratio of a single specimen.

The product (λ × Q) of the thermal conductivity λ and the endothermic quantity Q is preferably 1,000 W·J/mK·cm³ or more, more preferably 2,000 W·J/mK·cm³ or more and still more preferably 3,000 W·J/mK·cm³ or more, and preferably 16,000 W·J/mK·cm³ or less.

In the case where the endothermic quantity Q and the thermal conductivity λ of the heat absorbing member are both large values, the temperature rise of the battery module can more effectively be suppressed. By making the endothermic quantity Q large, the temperature of the cells is reduced, and by making the thermal conductivity λ high, it becomes easy for heat generated from the cells to transfer to the case and the like; so it is conceivable that by the synergetic effect of these actions, the temperature rise of the battery module can effectively be suppressed.

The heat absorbing member's endothermic quantity Qs per unit area of the cell surface may be set to preferably 50 J/cm² or more, more preferably 100 J/cm² or more and still more preferably 200 J/cm² or more. When the endothermic quantity Qs is thus a certain value or more, it becomes easy for the temperature rise of the cells to be suppressed. The upper limit of the endothermic quantity Qs per the unit area is not especially limited, but is, for example, 1,000 J/cm². The endothermic quantity Qs per the above unit area is, in the case where the maximum thickness of the heat absorbing member arranged on the cell surface is represented as Y (cm), calculated by Qs = Q × Y. Here, in the case where the heat absorbing member is provided in a uniform thickness on the cell surface, the average thickness and the thickness of any position become equal to the maximum thickness Y.

### (Heat absorbing member)

The heat absorbing member of the present invention comprises a resin and a filler. These components of the heat absorbing member will be described hereinafter.

### <Resin>

The resin contained in the heat absorbing member is not particularly limited, and examples thereof include rubbers and elastomers.

Examples of the rubber include silicone rubber, acrylic rubber, nitrile rubber, isoprene rubber, urethane rubber, ethylene propylene rubber, styrene·butadiene rubber, butadiene rubber, fluororubber and butyl rubber. In the case of using these rubbers, these rubbers may be crosslinked ones or uncrosslinked ones (that is, uncured ones) as they are.

Usable as the elastomer are thermoplastic elastomers such as polyester-based thermoplastic elastomer and polyurethane-based thermoplastic elastomer, and also thermosetting elastomers formed by curing a mixed liquid polymeric composition composed of a base resin and a curing agent. Examples thereof include polyurethane-based elastomers formed by curing a polymer having hydroxide groups and a polymeric composition containing isocyanate groups.

It is preferable that the resin contained in the heat absorbing member is silicone rubber, among the above. By using the silicone rubber, it becomes easy for the filler to be much filled, and it becomes easy for the thermal conductivity and the endothermic quantity to be regulated at desired values. It is preferable that the silicone rubber is formed from a liquid silicone, and specifically, it is preferable that the heat absorbing member is formed from a heat absorbing composition containing the liquid silicone and the filler.

The liquid silicone may be a silicone having no curability or a reaction curable silicone, but use of the reaction curable silicone is preferable. Here, "liquid" means being in a liquid state at room temperature (25°C).

Examples of the reaction curable silicone include addition reaction curable silicones, radical reaction curable silicones, condensation reaction curable silicones, ultraviolet or electron beam curable silicones and moisture curable silicones. It is preferable that the reaction curable silicones are addition reaction curable silicones, among the above. As the addition reaction curable silicones, more preferable are ones containing an alkenyl group-containing organopolysiloxane (base resin) and a hydrogenorganopolysiloxane (curing agent).

The content of the silicone rubber based on the total amount of the resin contained in the heat absorbing member is preferably 80% by mass or more, more preferably 95% by mass or more and still more preferably 100% by mass.

### <Filler>

The heat absorbing member of the present invention comprises a filler. The filler is not particularly limited as long as making the endothermic quantity Q and the thermal conductivity λ of the heat absorbing member to be in the above predetermined ranges.

Depending on the kind of the filler described later, the content of the filler is, with respect to 100 parts by mass of the resin, preferably 50 to 1,500 parts by mass and more preferably 100 to 1,000 parts by mass.

Examples of the filler include aluminum oxide, boron nitride, aluminum nitride, silicon carbide, aluminum hydroxide and magnesium hydroxide. It is preferable, from the viewpoint that the endothermic quantity Q and the thermal conductivity λ of the heat absorbing member are easily regulated in desired ranges, that the filler at least contains aluminum hydroxide, among these.

The aluminum hydroxide may be used singly in one kind, but in order to make large the endothermic quantity Q and the thermal conductivity λ by raising the amount of the filler to be filled in the heat absorbing member, it is preferable to use aluminum hydroxide in two or more kinds having different average particle diameters. From such a viewpoint, it is preferable that the aluminum hydroxide contains a small-particle diameter aluminum hydroxide of 2 µm or less in average particle diameter and a large-particle diameter aluminum hydroxide of more than 2 µm in average particle diameter. It is preferable that the small-particle diameter aluminum hydroxide is the one having an average particle diameter of 1 µm or less. Here, the average particle diameter can be measured with an electron microscope or the like.

The amount of the small-particle diameter aluminum hydroxide to the large-particle diameter aluminum hydroxide (small-particle diameter aluminum hydroxide/large-particle diameter aluminum hydroxide) is, from the viewpoint of raising the amount of the filler to be filled in the heat absorbing member, preferably 0.1 to 2, more preferably 0.1 to 0.8 and still more preferably 0.2 to 0.5.

Further, it is preferable, from the viewpoint of raising the amount of the filler to be filled in the heat absorbing member, that the large-particle diameter aluminum hydroxide contains a first large-particle diameter aluminum hydroxide having an average particle diameter of more than 2 µm and 20 µm or less, and a second large-particle diameter aluminum hydroxide having an average particle diameter of more than 20 µm and 100 µm or less. Here, the amount of the first large-particle diameter aluminum hydroxide to the second large-particle diameter aluminum hydroxide (first large-particle diameter aluminum hydroxide/second large-particle diameter aluminum hydroxide) is preferably 0.1 to 2, more preferably 0.2 to 1.5 and still more preferably 0.3 to 1.

From the viewpoint of improving the endothermic quantity Q and the thermal conductivity λ of the heat absorbing member, the amount of the aluminum hydroxide to 100 parts by mass of the resin is preferably 50 parts by mass or more, more preferably 100 parts by mass or more, still more preferably 300 parts by mass or more and further still more preferably 500 parts by mass or more, and preferably 1,500 parts by mass or less.

The content of the aluminum hydroxide based on the total amount of the filler is, from the viewpoint of raising the endothermic quantity Q and the thermal conductivity λ, preferably 10% by mass or more, more preferably 70% by mass or more and still more preferably 100% by mass. Then, in the case of concurrently using, as the filler, the aluminum hydroxide and fillers other than the aluminum hydroxide, from the viewpoint of regulating the thermal conductivity λ at a higher value, it is preferable that the filler contains the aluminum hydroxide and aluminum oxide, and it is preferable that the filler is composed only of the aluminum hydroxide and the aluminum oxide. In this case, the amount of the aluminum hydroxide to the aluminum oxide (aluminum hydroxide/aluminum oxide) may be made to be preferably in the range of 0.05 to 7 and more preferably 0.1 to 5.

The average particle diameter of the aluminum oxide is not particularly limited, but is preferably 0.5 to 150 µm and more preferably 1 to 100 µm.

The above filler may be surface treated with a silane coupling agent or the like. By using the filler having been surface treated, the filling ratio to the heat absorbing member can be raised. As the silane coupling agent, well-known ones can be used without any limitation, and examples thereof include dimethyldimethoxysilane, 3-acryloxypropyltrimethoxysilane, 3-methacryloxypropyltrimethoxysilane, vinyltrimethoxysilane, n-decyltrimethoxysilane, 3-isocyanatopropyltriethoxysilane, 3-(2-aminoethyl)aminopropyltrimethoxysilane, 3-mercaptopropyltrimethoxysilane, glycidoxypropyltrimethoxysilane and 3-phenylaminopropyltrimethoxysilane.

The heat absorbing member is formed from a heat absorbing composition containing the resin and the filler, and as described above, it is preferable that the heat absorbing member is formed from a heat absorbing composition containing the liquid silicone and the filler. Here, the amount of the filler to the liquid silicone is the same as the above amount of the filler to the resin.

Then, the heat absorbing composition may contain the above silane coupling agent and may contain additives such as dispersants, fire retardants, plasticizers, curing retarders, antioxidants, colorants and catalysts.

### (Battery pack)

A battery pack can be made by using a plurality of the battery modules provided with the above heat absorbing members.

Fig. 8 is an explanatory view showing one example of an assembling state of a battery pack. A battery pack 20 has a plurality of the battery modules 10, a battery pack housing 19 to house the battery modules 10, and heat-dissipating materials 18 provided between the battery modules 10 and the battery pack housing 19. The battery modules 10 are fixed to the battery pack housing 19 through the heat-dissipating materials 18.

The battery pack housing 19 can be formed from the same material as in the above case 11. In the battery pack 20, heat generated from the battery modules 10 can be dissipated to the battery pack housing 19 through the heat-dissipating materials 18. Heat generated in the cells 12 is thus transferred to the heat absorbing members 13, the cases 11, the heat-dissipating materials 18 and the battery pack housing, and heat dissipation to the outside can effectively be carried out. As the heat-dissipating material 18, there can be used a well-known material such as a silicone rubber containing a thermally conductive filler such as aluminum oxide, aluminum nitride or boron nitride, but the heat absorbing member in the present invention may also be used. Use of the heat absorbing member enables the temperature to be effectively reduced due to the endothermic quantity Q and the thermal conductivity λ being certain values or more.

### Examples

Hereinafter, the present invention will be described in more detail by way of Examples, but the present invention is not any more limited to these Examples.

In the present Examples, evaluations were made by the following methods.

### [Thermal conductivity]

The thermal conductivity of the heat absorbing member was determined by a method of measuring the thermal resistance by using a measuring instrument according to ASTM D5470-06.

A heat absorbing member of 1.0 mm in thickness was compressed so that the compression ratio became 10% (thickness: 0.9 mm), 20% (thickness: 0.8 mm) and 30% (thickness: 0.7 mm), and the thermal resistance at each compression ratio (10 to 30%) was measured. A graph with thickness as the abscissa and thermal resistance value as the ordinate was prepared by using these three thermal resistance values, and an approximate straight line on the three points was determined by the method of least squares. Then, the gradient of the approximate straight line represented the thermal conductivity.

The measurement of the thermal resistance was carried out at 80°C, with LW-9389, manufactured by Long Win Science and Technology Corp.

### [Endothermic quantity Q]

The endothermic quantity Q of the heat absorbing member was determined, as described in the present description, by determining the endothermic quantity Qf from 150°C to 350°C of the filler contained in the heat absorbing member and then being calculated from the Qf value.

The endothermic quantity Qf was measured with a TG-DTA analyzer (manufactured by Shimadzu Corp., a simultaneous thermogravimetric differential thermal analyzer "DTG-60". The endothermic quantity from 150 to 350°C was determined by heating a filler in a nitrogen atmosphere at a temperature-rise rate of 5°C/min from 25°C up to 600°C.

### [Example 1]

### (1) Preparation of a heat absorbing composition

There was prepared a heat absorbing composition composed of 100 parts by mass of an addition reaction curable silicone composed of a base resin and a curing agent, 150 parts by mass of an aluminum hydroxide having an average particle diameter of 1 µm, 150 parts by mass of an aluminum hydroxide having an average particle diameter of 10 µm, 300 parts by mass of an aluminum hydroxide having an average particle diameter of 54 µm, and 1 part by mass of a silane coupling agent.

### (2) Nail penetration test

### (Details of a cell used)

- Kind: a 94-Ah lithium ion secondary battery
- Shape: a rectangular cell, 125 mm in length, 173 mm in width, 70 mm in thickness
- Weight: 2 kg
- Output voltage: 4 V
- Energy density: 355 Wh/L

### (Test)

On the surfaces of the above rectangular cell, the heat absorbing composition was applied so as to make a heat absorbing member to have an average thickness (Y) indicated in Table 2 after curing. At this time, the heat absorbing composition was applied on all surfaces excluding one face (top face (70 mm × 173 mm)) of the cell. After the application, the heat absorbing composition was cured in the lapse of 24 hours at 25°C to thereby make a heat absorbing member. Both surfaces (two surfaces having the maximum area among cell surfaces) of the cell having the heat absorbing composition thus prepared were interposed between two aluminum plates (125 mm × 210 mm × 10 mm) corresponding to adjacent cells and end parts of the aluminum plates were fixed with bolts to make a sample for a nail penetration test. The temperature change was measured in the nail penetration test of the sample. The temperature change was measured by disposing a thermocouple "between the cell and the heat absorbing member" in order to measure the temperature of the cell when an abnormality occurred therein, and measuring the "maximum cell temperature until after the lapse of 50 sec". Further another thermocouple was disposed "between the aluminum plate and the heat absorbing member", which corresponded to on the surface of the cell contacting with an adjacent cell, and the external temperature after the lapse of 300 sec was measured.

Here, the reason that at this time, the "maximum cell temperature until after the lapse of 50 sec" was measured by the thermocouple disposed between the cell and the heat absorbing member was as follows. In the present nail penetration test, it was found that there was such a tendency that immediately after a nail was penetrated, the cell temperature rapidly rose and thereafter turned to lowering. The early-period temperature rise is remarkably rapid, and the outside temperature of the heat absorbing member was affected by the endothermic quantity and the thermal conductivity of the heat absorbing member as well as the time difference in heat transfer. Thus, a temperature less than an actual maximum temperature was detected and the temperature of the abnormal cell could not be accurately grasped; therefore, the temperature inside the heat absorbing member needed to be measured. If the early-period temperature rise of an abnormal cell can be suppressed low, it can be anticipated that there can be reduced the influence of thermal conduction to the circumference through the routes where intervention of heat absorbing members, for example, bus bars is difficult.

On the other hand, the reason that the "external temperature after the lapse of 300 sec" was measured by the thermocouple disposed between the aluminum plate and the heat absorbing member was because when about 300 sec elapsed, the state became a thermally stable state, and the temperature difference between inside and outside the heat absorbing member became a predetermined temperature influenced by the thermal conductivity, the endothermic quantity and the like; at this time, from the viewpoint of suppressing runaway of adjacent cells, it is useful that there is evaluated the temperature (external temperature) outside the heat absorbing member corresponding to a surface contacting with the adjacent cell temperature.

The nail penetration test was carried out by making a nail (φ6 mm, pointed end angle: 30°) to penetrate from a side face (having an area of 70 mm × 125 mm) of the cell to the center part of the cell at a speed of 20 mm/sec.

There were measured using the thermocouples, the maximum cell temperature until after the lapse of 50 sec after the nail was made to penetrate the cell, and the external temperature after 300 sec. Evaluation was made according to the following criteria. Results are shown in Table 2.

### «Effect of suppressing the early-period temperature rise»

A ··· The maximum cell temperature until after the lapse of 50 sec was 200°C or less.
B ··· The maximum cell temperature until after the lapse of 50 sec was more than 200°C and 300°C or less.
C ··· The maximum cell temperature until after the lapse of 50 sec was more than 300°C and 350°C or less.
D ··· The maximum cell temperature until after the lapse of 50 sec was more than 350°C.

### «Effect of suppressing the throughout-period temperature rise»

A ··· The external temperature after the lapse of 300 sec was 270°C or less.
B ··· The external temperature after the lapse of 300 sec was more than 270°C and 300°C or less.
D ··· The external temperature after the lapse of 300 sec was more than 300°C.

### «Overall evaluation»

A ··· The early-period result and the throughout-period result were both A.
B ··· One of the early-period result and the throughout-period result was B, and the other was A or B.
C ··· At least one of the early-period result and the throughout-period result was C, and the other was any of A, B and C.
D ··· At least one of the early-period result and the throughout-period result was D.

### [Examples 2 to 5, Comparative Example 3]

Heat absorbing compositions were prepared and the nail penetration test was carried out, as in Example 1, except for altering compositions of the heat absorbing compositions to those indicated in Table 1. Results are shown in Table 2.

### [Comparative Example 1]

The nail penetration test was carried out as in Example 1, except for using an aerogel (thickness: 10 mm, thermal conductivity: 0.017 W/mK) in place of the heat absorbing composition used in Example 1. Results are shown in Table 2.

### [Comparative Example 2]

The nail penetration test was carried out as in Example 1, except for using no heat absorbing composition in Example 1.

**Table 1**

| | | Example | | | | | Comparative Example | | |
|---|---|---|---|---|---|---|---|---|---|
| | | 1 | 2 | 3 | 4 | 5 | 1 | 2 | 3 |
| Heat Absorbing Composition (parts by mass) | Liquid silicone (addition reaction curable silicone) | 100 | 100 | 100 | 100 | 100 | Aerogel | | 100 |
| | Aluminum hydroxide (average particle diameter: 1 µm, small particle diameter, specific gravity: 2.42) | 150 | 140 | 150 | 100 | 150 | | | 60 |
| | Aluminum hydroxide (average particle diameter: 10 µm, first large particle diameter, specific gravity: 2.42) | 150 | 0 | 150 | 135 | 200 | | | 60 |
| | Aluminum hydroxide (average particle diameter: 54 µm, second large particle diameter, specific gravity: 2.42) | 300 | 0 | 300 | 0 | 0 | | | 120 |
| | Aluminum hydroxide (average particle diameter: 100 µm, second large particle diameter, specific gravity: 2.42) | 0 | 0 | 0 | 270 | 400 | | | |
| | Aluminum oxide (average particle diameter: 3.7 µm, specific gravity: 3.9) | 0 | 200 | 0 | 0 | 0 | | | 0 |
| | Aluminum oxide (average particle diameter: 45 µm, specific gravity: 3.9) | 0 | 0 | 0 | 0 | 200 | | | |
| | Aluminum oxide (average particle diameter: 71.1 µm, specific gravity: 3.9) | 0 | 600 | 0 | 0 | 0 | | | 0 |
| | Coupling agent (specific gravity: 1) | 1 | 1 | 1 | 1 | 1 | | | 1 |

**Table 2**

| | | \Example | | | | | Comparative Example | | |
|---|---|---|---|---|---|---|---|---|---|
| | | 1 | 2 | 3 | 4 | 5 | 1 | 2 | 3 |
| Composition of Heat Absorbing Member (parts by mass) | Silicone rubber (specific gravity: 1) | 100 | 100 | 100 | 100 | 100 | Aerogel | | 100 |
| | Aluminum hydroxide (average particle diameter: 1 µm, small particle diameter, specific gravity: 2.42) | 150 | 140 | 150 | 100 | 150 | | | 60 |
| | Aluminum hydroxide (average particle diameter: 10 µm, first large particle diameter, specific gravity: 2.42) | 150 | 0 | 150 | 130 | 200 | | | 60 |
| | Aluminum hydroxide (average particle diameter: 54 µm, second large particle diameter, specific gravity: 2.42) | 300 | 0 | 300 | 0 | 0 | | | 120 |
| | Aluminum hydroxide (average particle diameter: 100 µm, second large particle diameter, specific gravity: 2.42) | 0 | 0 | 0 | 270 | 400 | | | 0 |
| | Aluminum oxide (average particle diameter: 3.7 µm, specific gravity: 3.9) | 0 | 200 | 0 | 0 | 0 | | | 0 |
| | Aluminum oxide (average particle diameter: 45 µm, specific gravity: 3.9) | 0 | 0 | 0 | 0 | 200 | | | 0 |
| | Aluminum oxide (average particle diameter: 71.1 µm, specific gravity: 3.9) | 0 | 600 | 0 | 0 | 0 | | | 0 |
| Physical Properties and Others | Aluminum hydroxide (% by volume) | 71 | 16 | 71 | 67 | 67 | 0 | 0 | 50 |
| | Endothermic quantity Qf of filler (J/cm³) | 4046 | 4251 | 4046 | 4032 | 4032 | - | - | 4046 |
| | Endothermic quantity Q per unit volume of heat absorbing member (J/cm³) | 2883 | 678 | 2883 | 2717 | 2709 | 0 | 0 | 2014 |
| | Endothermic quantity per unit volume of small-particle diameter aluminum hydroxide contained in heat absorbing member (J/cm³) * Calculation value from 1-µm aluminum hydroxide content | 721 | 678 | 721 | 543 | 542 | 0 | 0 | 504 |
| | Endothermic quantity per unit volume of large-particle diameter aluminum hydroxide contained in heat absorbing member (J/cm³) * Calculation value from 10 or more-µm aluminum hydroxide content | 2162 | 0 | 2162 | 2174 | 2168 | 0 | 0 | 1511 |
| | Thermal conductivity λ (W/mK) | 2 | 3 | 2 | 1.7 | 3 | 0.017 | 0.045 | 0.4 |
| | Thermal conductivity λ × Endothermic quantity Q (W·J/mK·cm³) | 5766 | 2033 | 5766 | 4619 | 8128 | 0 | 0 | 806 |
| Test | Average thickness of heat absorbing member (mm) | 1 | 1 | 0.2 | 1 | 1 | 1 | - | 1 |
| | Maximum thickness Y of heat absorbing member (mm) | 1 | 1 | 0.2 | 1 | 1 | 1 | - | 1 |
| | Endothermic quantity Qs per unit area (J/cm²) | 288 | 68 | 58 | 272 | 271 | 0 | - | 201 |
| | Maximum cell temperature until 50 sec (maximum temperature in temperature rise in early period) (°C) | 180 | 350 | 290 | 150 | 280 | 500 | 438 | 380 |
| | External temperature after 300 sec (°C) | 240 | 285 | 298 | 250 | 280 | 230 | 305 | 298 |
| Evaluation Results | Early period | A | C | B | A | B | D | D | D |
| | Throughout period | A | B | B | A | B | A | D | B |
| | Overall evaluation | A | C | B | A | B | D | D | D |

| | | | | | | | | | |
|---|---|---|---|---|---|---|---|---|---|
| *: The endothermic quantity (J/cm³) in Table was an endothermic quantity when the material concerned was heated from 150 to 350°C. | | | | | | | | | |

As is clear from the above results of Examples, it is found that when there was used a heat absorbing member whose endothermic quantity Q and thermal conductivity λ were certain values or more, even in the case where abnormalities occurred in the cell, the temperature rise was suppressed in the abnormal early period and in the certain period from abnormality occurrence. By contrast, from the results of Comparative Examples, it is found that in the case where the endothermic quantity Q and the thermal conductivity λ of a heat absorbing member were not certain values or more, suppression of the temperature rise of the cell was difficult. Specifically, in Comparative Example 3, although the endothermic quantity Q was a value more than a predetermined value specified in the present invention, the thermal conductivity λ was low, giving a poor result of "D" in the overall evaluation. It is thereby found that both of the endothermic quantity Q and the thermal conductivity λ needed to be values equal to or more than predetermined values.

Then among Examples 1 to 5, Examples 1 and 3 to 5, whose endothermic quantity Q was a large value of 1,000 J/cm³ or more, gave "B" or more in the overall evaluation; Example 2, whose endothermic quantity Q was 500 or more and less than 1,000 J/cm³, gave "C" in the overall evaluation; it is thus found that by regulating the endothermic quantity Q in a suitable range, the temperature rise of the cell was more suppressed.

In Example 1 and Example 3, despite the same composition of the heat absorbing member, the endothermic quantities Qs per unit area were different. That is, the more value of Qs in Example 1 was in a suitable range, and resulted in a high overall evaluation; it is then found that the temperature rise of the cell was easily suppressed.

### Reference Signs List

- 10: BATTERY MODULE
- 11: CASE
- 11a: LOWER FACE
- 11b: UPPER FACE
- 12: CELL
- 12a: POSITIVE ELECTRODE
- 12b: NEGATIVE ELECTRODE
- 12c: FLAT FACE
- 12d: EDGE
- 13: HEAT ABSORBING MEMBER
- 14: BETWEEN CELLS
- 15: ABSORBING MATERIAL
- 16: COOLING FIN
- 18: HEAT-DISSIPATING MATERIAL
- 19: BATTERY PACK HOUSING
- 20: BATTERY PACK

## Claims

1. A battery module, comprising:
a case;
a plurality of cells being arranged in the case and having an energy density of 200 Wh/L or more; and
a heat absorbing member provided at least either between the case and the plurality of cells or between the plurality of cells,
wherein the heat absorbing member has an endothermic quantity Q from 150°C to 350°C of 500 J/cm³ or more and a thermal conductivity λ of 0.8 W/mK or more.

2. The battery module according to claim 1, wherein the heat absorbing member is provided so that an endothermic quantity Qs per unit area of the cell surface is 50 J/cm² or more.

3. The battery module according to claim 1 or 2, wherein a product (λ × Q) of the thermal conductivity λ and the endothermic quantity Q is 1,000 W·J/mK·cm³ or more.

4. The battery module according to any one of claims 1 to 3, wherein the heat absorbing member comprises a resin and a filler.

5. The battery module according to claim 4, wherein the resin is a silicone rubber.

6. The battery module according to claim 4 or 5, wherein the filler comprises at least aluminum hydroxide.

7. The battery module according to claim 6, wherein the aluminum hydroxide comprises a small-particle diameter aluminum hydroxide having an average particle diameter of 2 µm or less, and a large-particle diameter aluminum hydroxide having an average particle diameter of more than 2 µm.

8. The battery module according to claim 6 or 7, wherein the heat absorbing member comprises 100 parts by mass or more of the aluminum hydroxide with respect to 100 parts by mass of the resin.
